(19) **Europäisches Patentamt**

**European Patent Office**

**Office européen des brevets**

(11) **EP 0 602 148 B1**

(12) **EUROPEAN PATENT SPECIFICATION**

(45) Date of publication and mention
of the grant of the patent:
**28.03.2001 Bulletin 2001/13**

(51) Int Cl.⁷: **G02C 1/00**, G02C 11/08,
G02C 7/02, A61F 9/02

(21) Application number: **92919308.4**

(22) Date of filing: **28.08.1992**

(86) International application number:
**PCT/US92/07321**

(87) International publication number:
**WO 93/05431 (18.03.1993 Gazette 1993/08)**

(54) **DIVING MASK WITH LENSES AND METHOD OF FABRICATING THE SAME**

TAUCHERMASKE MIT LINSEN UND METHODE ZU IHRER HERSTELLUNG

MASQUE DE PLONGEE A LENTILLES ET SON PROCEDE DE PRODUCTION

(84) Designated Contracting States:
**DE ES FR GB IT SE**

(30) Priority: **28.08.1991 US 750988**

(43) Date of publication of application:
**22.06.1994 Bulletin 1994/25**

(60) Divisional application:
**00202885.0 / 1 055 956**

(73) Proprietor: **KRANHOUSE, Jon**
**Pacific Palisades, CA 90272 (US)**

(72) Inventor: **KRANHOUSE, Jon**
**Pacific Palisades, CA 90272 (US)**

(74) Representative: **Dealtry, Brian**
**Eric Potter Clarkson,**
**Park View House,**
**58 The Ropewalk**
**Nottingham NG1 5DD (GB)**

(56) References cited:
| | |
|---|---|
| **CH-A- 91 244** | **DE-A- 3 935 890** |
| **GB-A- 840 638** | **US-A- 2 928 097** |
| **US-A- 3 040 616** | **US-A- 3 051 957** |
| **US-A- 3 186 005** | **US-A- 3 636 250** |
| **US-A- 3 672 750** | **US-A- 3 725 953** |
| **US-A- 3 899 244** | **US-A- 4 241 898** |

**Description**

BACKGROUND OF THE INVENTION

The present invention relates generally to underwater face masks and, more particularly, to underwater diving masks having eyepieces or lenses mounted on a flexible gasket.

In the past, a variety of underwater face masks have been used for sporting and other activities such as skin and scuba diving. Early underwater face masks typically had several common features, including a contiguous air space shared by the diver's nose and eyes, generally flat, glass or plastic windows, eyepieces or ports fixed approximately perpendicularly to the wearer's straight-ahead viewing axis and a flexible rubber or plastic support structure for holding the ports in position and trapping an air pocket against the wearer's face. A contiguous air pocket over both the wearer's nose and eyes, as opposed to a mask covering the eyes only, allows for equalizing pressure inside the mask with ambient water pressure as the wearer ascends and descends in the water. Such equalization is necessary to avoid injury to the wearer.

Such conventional flat-window face masks share a variety of shortcomings. The windows or eyepieces of conventional flat-window masks must be supported out from the face. Above and below water, the wearer's horizontal and vertical fields of view are severely limited by the flexible rubber or plastic structures providing such support, thereby creating a sense of "tunnel vision" and a closed-in, claustrophobic feeling. Above water, conventional flat-window masks provide no more than a 140 degree horizontal by 90 degree vertical field of view. Below water, because of the refraction-induced magnification distortion of an air-water viewing system, discussed more fully hereinbelow, this field of view is effectively reduced to approximately 105 degrees horizontal by 67.5 degrees vertical.

Additionally, conventional flat-window masks suffer quite significant magnification-distortion problems from the difference in refractive indices between water and air. Specifically, objects viewed on an axis perpendicular to the window appear approximately 33% larger and 25% closer than they actually are. The magnification-distortion of objects viewed off-axis is even larger.

Further, conventional flat-window masks create a significant amount of hydrodynamic drag and present a significant risk of slipping off the wearer's face if hit by an unanticipated or oblique-angle wave or current.

These and other flat-window mask problems have attempted to be overcome, with less than satisfactory results, by spherically-shaped eyepieces or lenses used for underwater masks. For example, U.S. Patent Nos. 3,899,244, issued to Mulder on August 12, 1975, and 3,172,750, issued to Hagen on June 27, 1972, disclose underwater masks that use built-in corrective lenses in addition to spherically-shaped lenses to improve viewing under water. As such, these masks do not provide optimum viewing characteristics under water without the use of additional corrective lenses. Other single and multiple lens systems used for underwater face masks that do not provide optimum viewing conditions are disclosed in U.S. Patent Nos. 3,944,345, issued to Decorato on March 16, 1976; 3,040,616, issued to Simpson on June 26, 1962; 2,088,262, issued to Grano on July 27, 1937; 2,928,097, issued to Newfeld on March 15, 1960; and 1,742,412, issued to O'Flanagan on January 7, 1930.

U.S. Patent No. 4,607,398, issued to Faulconer on August 26, 1986, discloses a strap and retainer used for a diver's mask. In addition, U.S. Patent No. 4,856,120, issued to Hart on August 15, 1989, describes a purge valve used for a diving mask and a deflector attached to the mask and used to channel air bubbles expelled during purging to the sides of the mask.

US 3,672,750 discloses a diving mask having two generally hemispherical shaped lenses mounted on a flexible portion of the mask. The lenses have an outer surface radius in the range of 3.18 cm (1.25 inches) to 5.08 cm (2.0 inches).

SUMMARY OF THE INVENTION

Accordingly, it is an object of this invention to provide a diving mask which furnishes improved viewing characteristics under water.

It is another object of this invention to provide a diving mask which may be used under water by a majority of divers without the need to use additional corrective lenses.

It is still another object of this invention to provide a diving mask which may be used above and under water with additional corrective lenses if desired.

It is still another object of this invention to provide a diving mask which furnishes a secure seal between the mask and a wearer's face.

It is still another object of this invention to provide a method of fabricating such a diving mask.

These and other objects and advantages are attained by a diving mask having hemispherically-shaped lenses mounted on a flexible gasket and fitted to the contours of a user's face.

According to one aspect of the present invention there is provided an underwater diving mask according to claims 1 and 7.

According to another aspect of the present invention there is provided a method of fabricating a diving mask according to claims 14, 18 and 19.

Laser scanning or topographical mapping is used to determine the contours of a user's face. The hemispherically-shaped lenses are then sized to fit the contours of the face. As a result, the spherical center of the hemispherically-shaped lenses substantially coincides with the optical nodal point of the user's eyes. This improvement virtually eliminates the phenomenon of underwater magnification-distortion caused by the difference in refractive indices of water and air. Improved horizontal and vertical fields of view are also provided by the hemispherically-shaped lenses. A secure seal is provided between the diving mask and a user's face by the flexible gasket.

Another embodiment of the diving mask is provided having a standard pair of hemispherically-shaped lenses mounted on a contoured portion of the mask which is fitted to the contours of a user's face. The contoured portion is mounted on the flexible gasket.

In still another embodiment of the diving mask, the hemispherically-shaped lenses are designed so that the spherical center of curvature of the lenses substantially coincides with the center of rotation of a user's eyes.

In yet another embodiment of the diving mask, a shaft is mounted on the hemispherically-shaped lenses. The shaft is coupled to a pair of retractable corrective lenses, and may be used to lower the corrective lenses to a position in front of a user's eyes and to raise the lenses to a position above the eyes. The corrective lenses may be used by near-and far-sighted users.

In still another embodiment of the diving mask, the hemispherically-shaped lenses are mounted on a support portion having a peripheral flange. The support portion, in turn, is mounted on a flexible gasket of selected size. The diving mask may have at least one purge valve in the support portion.

In still another embodiment, a diving mask is provided having a purge valve in at least one of the hemispherically-shaped lenses. The purge valve is located at the front and bottom of the lens and in an area used to collect water which has leaked into the mask. The collecting area is angled to facilitate expelling water from the diving mask through the purge valve so that exhaust bubbles pass toward the back of the mask, away from the field of vision of a diver.

The various features of the present invention will be best understood together with further objects and advantages by reference to the following description of the preferred embodiments taken in conjunction with the accompanying drawings.

## BRIEF DESCRIPTION OF THE DRAWINGS

FIG. 1 is a front elevational view of a diving mask with two hemispherically-shaped lenses mounted on a flexible gasket or portion and fitted to the face of a user, illustrating the principles of the present invention;

FIG. 2 is a side elevational view of the diving mask of FIG. 1 shown worn on the head of the user;

FIG. 3 is a partial cross-sectional view of the diving mask taken in the direction of arrows 3-3 shown in FIG. 1, illustrating how the spherical center of curvature of one of the hemispherically-shaped lenses substantially coincides with the optical nodal point of the user's eye;

FIG. 4 is a cross-sectional view of the diving mask taken in the direction of arrows 4-4 shown in FIG. 2 also showing how the spherical center of curvature substantially coincides with the optical nodal point;

FIG. 5 is an enlarged detailed cross-sectional view of a skirt portion of the flexible gasket of the diving mask of FIG. 1;

FIG. 6 is an enlarged detailed cross-sectional view of the skirt portion showing how one of the hemispherically-shaped lenses is mounted on the skirt portion, and how apertures in the skirt portion allow water to fill a cavity in the skirt portion, helping to provide a cushioning effect against the user's face;

FIG. 7 is a partial cross-sectional view of another embodiment of the diving mask having a turning shaft mounted on the hemispherically-shaped lenses which may be used to lower retractable corrective lenses in front of a user's eyes;

FIG. 8 is a partial cross-sectional view of the turning shaft and hemispherically-shaped lenses taken in the direction of arrows 8-8 shown in FIG. 7;

FIG. 9 is a partial cross-sectional view of the diving mask, taken like FIG. 7, illustrating how the turning shaft may be used to raise the retractable corrective lenses from a position in front of the user's eyes, as shown in FIG. 7, to a position above the eyes;

FIG. 10 is an exploded view of another embodiment of the diving mask having a standard pair of hemispherically-shaped lenses mounted on a contoured portion of the mask which is fitted to the contours of a user's face, and mounted on the flexible gasket;

FIG. 11 is an exploded, enlarged, detailed cross-sectional view of the skirt portion of the flexible gasket, the contoured portion of the mask and one of the hemispherically-shaped lenses, showing the contoured portion attached to the gasket;

FIG. 12 is an enlarged detailed cross-sectional view, taken like FIG. 11, showing the hemispherically-shaped lens attached to the contoured portion;

FIG. 13 is a front elevational view of another embodiment of the diving mask having a pair of hemispherically-shaped lenses with purge valves therein mounted on the flexible gasket;

FIG. 14 is a side elevational view of the diving mask of FIG. 13 shown worn on the head of a user;

FIG. 15 is a partial cross-sectional view of the diving mask taken in the direction of arrows 15-15 shown in FIG. 13, illustrating how the hemispherically-shaped lenses may be connected to straps and the flexible gasket by a clamp and flange;

FIG. 16 is a schematic representation illustrating how the spherical center of curvature of the hemispherically-shaped lenses of FIG. 13 substantially coincides or aligns with the center of rotation of a user's eyes and falls within a predetermined acceptable zone of misalignment;

FIG. 17 is a perspective view of another embodiment of the diving mask having a pair of hemispherically-shaped lenses mounted on a peripheral flange of a support portion of the mask;

FIG. 18 is a partial cross-sectional view of another embodiment of a shaft shown mounted on the hemispherically-shaped lenses which may be used to raise and lower corrective lenses in front of a user's eyes; and

FIG. 19 is an enlarged cross-sectional view taken in the direction of arrows 19-19 shown in FIG. 18.

## DESCRIPTION OF THE PREFERRED EMBODIMENTS

The following specification taken in conjunction with the drawings sets forth the preferred embodiments of the present invention in such a manner that any person skilled in the art can make or use the invention. The embodiments of the invention disclosed herein are the best modes contemplated by the inventor for carrying out his invention in a commercial environment, although it should be understood that various modifications can be accomplished within the parameters of the present invention.

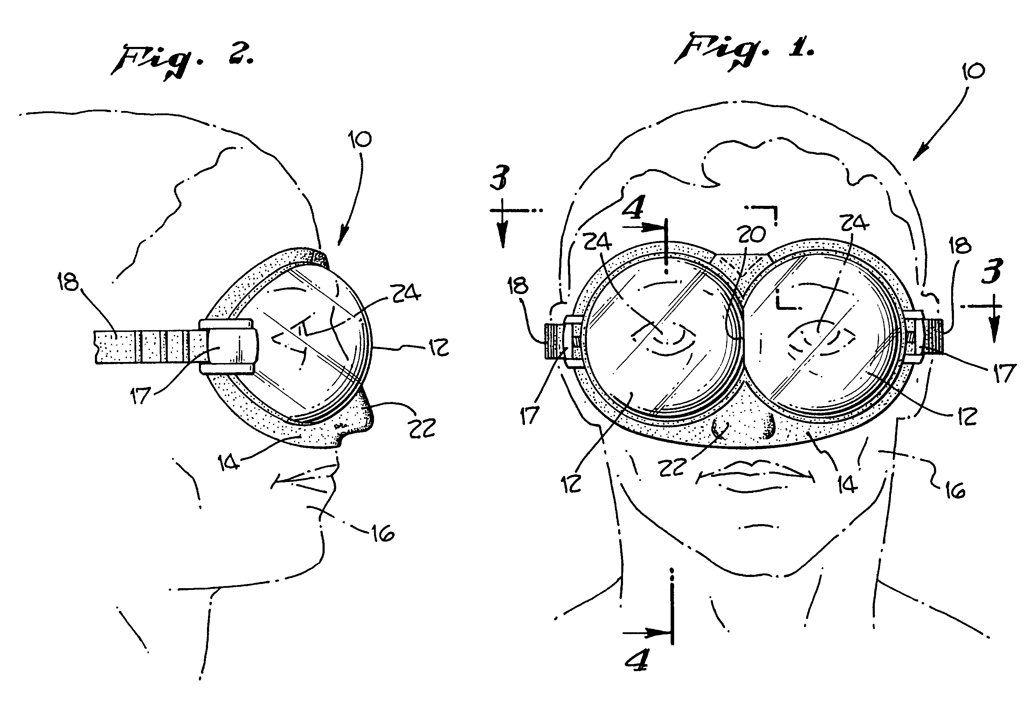

FIGS. 1 and 2 show a preferred embodiment of the diving mask 10 of the present invention. The diving mask 10 has two eyepieces, or generally hemispherically-shaped lenses 12, mounted on a flexible gasket or portion 14 of the mask 10. Each lens 12 is a segment of a sphere that approximates a hemisphere. It is important to note that each lens 12 may be smaller or larger than a hemisphere, and only needs to approximate the shape of a hemisphere.

The lenses 12 are preferably made of plastic, glass, or the like. However, any transparent, optically clear material may be used for the lenses 12. The thickness of the lenses 12 preferably has a range of approximately from about 0.13 cm (1/20-inch) to about 1.27 cm (1/2-inch). However, any thickness may be used. It is important to note that any minimum thickness that provides structural integrity may be used for the lenses 12. The diving mask 10 is secured to the face 16 of a user by straps 18 that are preferably fused or otherwise attached to the lenses 12 by, for example, members 17, or the like. As shown in FIGS. 1 and 3, the lenses 12 are preferably fused together at edge 20 adjacent the bridge of a user's nose. However, the lenses 12 may be separated by part of the flexible portion 14 running along the bridge of the user's nose (not shown), if desired.

The flexible gasket or portion 14 is preferably made out of a flexible or elastic plastic or rubber material such as silicone, neoprene, or the like. However, any other flexible material may be used for portion 14. A nose portion 22 of flexible portion 14 is also provided so that a seal is furnished between the user's face 16 and the diving mask 10, and an air space is provided between the lenses 12 and the user's eyes 24 and face 16 under the lenses 12. The air space provides air pressure inside the diving mask 10 which counteracts the ambient water pressure that exists outside the mask 10 when the user is under water and protects the user's eyes 24.

As discussed below, the contours of the user's face are scanned or topographically mapped and the lenses 12 are shaped to closely fit the contours of the user's face 16.

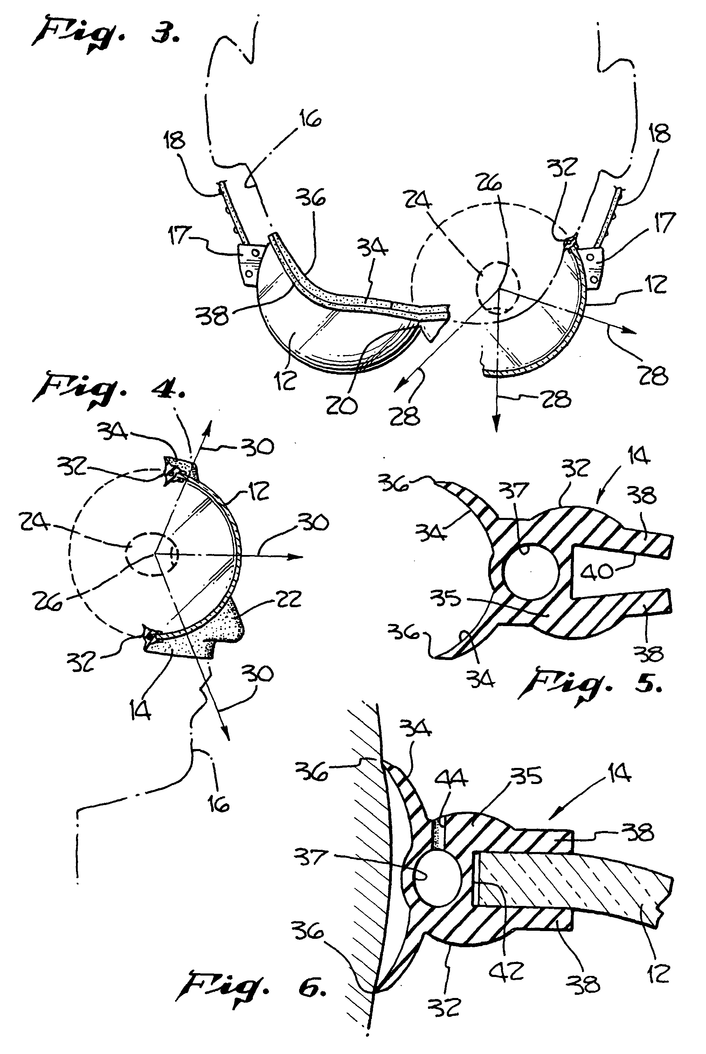

In order to provide optimum viewing characteristics under water, the edges or ends 42 of the lenses 12 (see FIG. 6) must closely fit the contours of a user's face 16 so that the spherical center of curvature of the hemispherically-shaped lenses 12 substantially coincides with the optical nodal point 26 of the user's eyes 24 as illustrated by arrows 28 and 30 in FIGS. 3 and 4, respectively. When the spherical center of curvature and optical nodal point substantially coincide, this results in virtually eliminating the phenomenon of underwater magnification-distortion caused by the difference in refractive indices of water and air which causes objects to appear about 33% larger and about 25% closer than they actually are. In addition, such coinciding of the spherical center of curvature and optical nodal point provides hemispherically-shaped lenses 12 that have a horizontal field of view of about 200 degrees and a vertical field of view of about 150 degrees.

The outside diameter of the hemispherically-shaped lenses 12 also determines the distance from the lenses 12 that a user's eye 24 must focus in order to see an image formed by an object under water. The theoretical basis for this is Snell's Law of Refraction, which for a basic hemispherical lens and paraxial light rays may be expressed as:

$$\frac{n}{s} + \frac{n^1}{s^1} = \frac{n^1 - n}{R}$$

where

n = the index of refraction of the medium in which the object is located;
$n^1$ = the index of refraction of the lens;
s = the distance of the object from the outer surface of the lens;
$s^1$ = the location of the image formed from the outer surface of the lens; and
R = the radius of curvature of the lens.

Using n=1.34, the index of refraction of salt water, and $n^1$=1.49, the index of refraction of plexiglass, the following table indicates the distances from the front surface (cornea) of a user's eye 24 that the eye 24 must focus for different diameter hemispherically-shaped lenses having a lens thickness of 0.64 cm (.25 inches) to clearly see the apparent image of an object located at different distances from the lenses. All dimensions are presented in inches and should be converted to cm by multiplying by the value 2.54. The chart assumes the distance from the eye's internal optical nodal point to the outer surface of the cornea to be 1.27 cm (.5 inch).

| Exterior Dome Diameter | To focus from cornea to object at 12" | To focus from cornea to object at 25" | To focus from cornea to object at 50" | To focus from cornea to object at 120" | To focus from cornea to object at ∞ |
|---|---|---|---|---|---|
| 3 | 3.167 | 3.628 | 3.890 | 4.062 | 4.195 |
| 3.5 | 3.737 | 4.364 | 4.733 | 4.979 | 5.172 |
| 4 | 4.261 | 5.067 | 5.556 | 5.888 | 6.151 |
| 4.5 | 4.743 | 5.738 | 6.358 | 6.787 | 7.131 |
| 5 | 5.188 | 6.379 | 7.140 | 7.677 | 8.113 |
| 5.5 | 5.600 | 6.991 | 7.903 | 8.557 | 9.095 |
| 6 | 5.983 | 7.577 | 8.647 | 9.427 | 10.077 |
| 6.5 | 6.840 | 8.138 | 9.374 | 10.288 | 11.060 |
| 7 | 6.672 | 8.675 | 10.082 | 11.139 | 12.044 |
| 7.5 | 6.984 | 9.191 | 10.774 | 11.981 | 13.027 |
| 8 | 7.275 | 9.685 | 11.449 | 12.814 | 14.011 |

Taking an example where n=1.34, the index of refraction of salt water; $n^1$=1.49, the index of refraction of plexiglass; R= 6.99 cm (2.75 inches), the radius of of curvature of a 13.97 cm (5.5 inch) diameter dome lens; and s= 57.79 cm (22.75 inches), the distance from the lens' outer surface of an object 63.5 cm (25 inches) from an eye's corneal surface, the solution for $s^1$ is -868.9 cm (-342.085 inches); i.e., the image is formed 868.9 cm (342.085 inches) from the dome lens' outer surface on the opposite side relative to the object.

The above equation is then solved for this image using the inside surface of the dome lens in which s, the object distance, is now -869.53 cm (-342.335 inches) (compensating for the 0.64 cm (.25 inch) thickness of the dome lens), n=1.49 (for the plexiglass), $n^1$=1 (for air), and R= 6.35 cm (2.5 inches) (compensating for the 0.64 cm (.25 inch) thickness of the dome lens). This results in a value for $s^1$ of -12.68 cm (-4.991 inches), i.e., the image seen by the user is 12.68 cm (4.991 inches) from the inside surface of the dome lens toward the object. Add to this 6.35 cm (2.5 inches) for the inside radius of the dome lens, less the 1.27 cm (.5 inch) for the distance from the nodal point of the eyeball to the outer corneal surface to arrive at 17.76 cm (6.991 inches), as indicated in the chart for a 13.97 cm (5.5 inch) diameter dome and a 63.5 cm (25 inch) object distance.

The exterior diameter of the hemispherically-shaped lenses 12 has a range of from about 10.8 cm (4.25 inches) to about 22.9 cm (9 inches).

Referring now to FIGS. 5 and 6, a skirt portion 32 of the flexible portion 14 is shown having a body portion 35 with an elongated cavity 37 running the length thereof, flexible curved extensions 34 and edges 36 that contact the contours of a user's face 16 (see FIG. 3), and clevis arms 38 that extend away from the face 16. The clevis arms 38 form a channel 40 which engages the ends or edges 42 of the lenses 12 (see FIG. 6). The lenses 12 may be attached to channel 40 using any desirable method such as by force fitting, using adhesive, by fusion of the parts, or the like. The edges 42 of the lenses 12 are formed to match the contours of a user's face 16 (see FIG. 3) which are measured by scanning or topographical mapping as discussed below.

A secure seal is provided between the flexible gasket portion 14 and the user's face 16. The skirt portion 32 of the gasket 14 has a plurality of apertures 44 passing through body portion 35 and into elongated cavity 37. The apertures 44 preferably are spaced about 1.27 cm (0.5 inch) apart along cavity 37 and cause the cavity 37 to fill with water when a user is under water, so that pressure inside the cavity 37 is equal to ambient water pressure, which provides a cushioning effect against the user's face 16.

In order to fit the edges 42 of the lenses 12 to the contours of a user's face 16, laser scanning or topographical mapping may be used to accurately determine the contours of the face 16. Apparatus and technique which may be used for laser scanning a user's face are disclosed, for example, in U.S. Patent No. 3,636,250, issued to Haeff on January 18, 1972, the disclosure of which is hereby incorporated by reference. However, any available technique, including any high-speed, optical scanning technique or topographical mapping technique, may be used to determine the contours of a user's face 16.

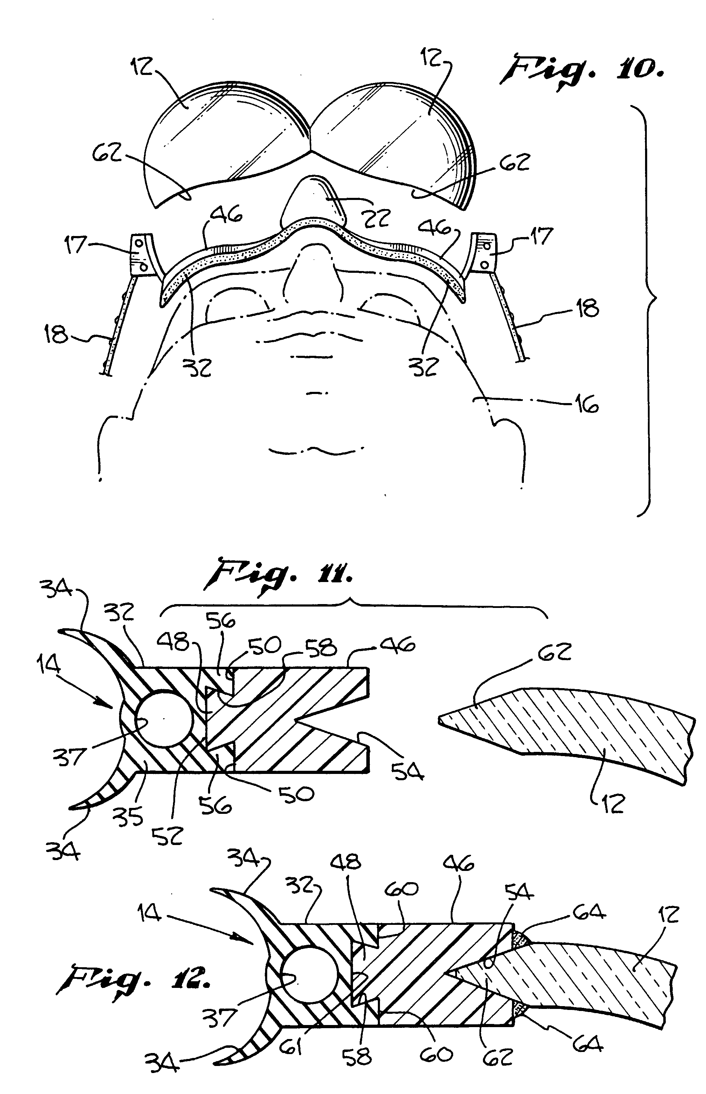

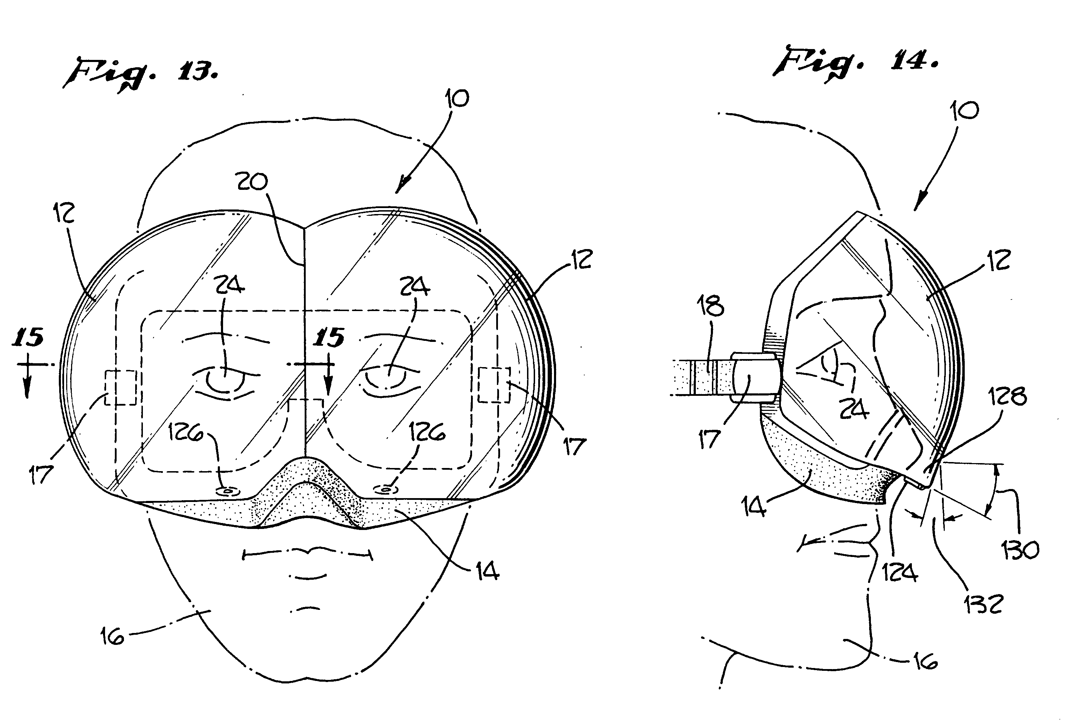

FIGS. 10 through 12 show another embodiment of the diving mask 10 having a standard pair of hemispherically-shaped lenses 12 mounted on a contoured portion 46 of the mask 12. The contoured portion 46 is attached to the skirt portion 32 of the flexible gasket 14, as shown in FIGS. 11 and 12, with extension 48 of portion 46 engaging channel 58 formed by clevis arms 56 of the skirt portion 32 and edges or surfaces 50 and 52 of portion 46 being in contact with edges or surfaces 60 and 61 of skirt portion 32. The contoured portion 46 may be attached to the skirt portion 32 by force fitting, using adhesive, by fusion of the parts, or the like.

Edges or surfaces 50 and 52 of the contoured portion 46 are shaped to closely fit the contours of a user's face 16 using laser scanning or topographical mapping as discussed above. Contoured portion 46 may be made out of plastic, or any desirable material, and edges 50 and 52 may be cut, shaped, molded or otherwise formed to fit the contours of the user's face 16.

It is important to note that edges 50 and 52 and extension 48 of the contoured portion 46 may have any desirable configurations or shapes, and the configuration and shape of clevis arms 56 and channel 58 of the skirt portion 32 may also be varied or designed to provide any desirable joint between portions 32 and 46. The skirt portion 32 preferably has the elongated cavity 37, apertures 44 and flexible curved extensions 34 discussed above.

The standard pair of lenses 12 may be attached to the contoured portion 46 by engaging end or edge 62 of the lenses 12 in groove 54 provided in portion 46 by force fitting, using adhesive 64, by fusion of the parts, or the like. Also, the configuration or shape of end 62 and groove 54 may be varied to provide any desirable joint.

A majority of divers may use the above described diving mask 10 because the preferred exterior diameter of the lenses 12 has a range of from about 10.8 cm (4.25 inches) to about 22.9 cm (9.0 inches), resulting in focusing distances of from about 11.43 cm (4.5 inches) to about 30.48 cm (12 inches) in front of the diving mask. Most divers will be able to focus their eyes within these distances. Therefore, most divers will be able to use the diving mask 10 without the need to use a corrective lens.

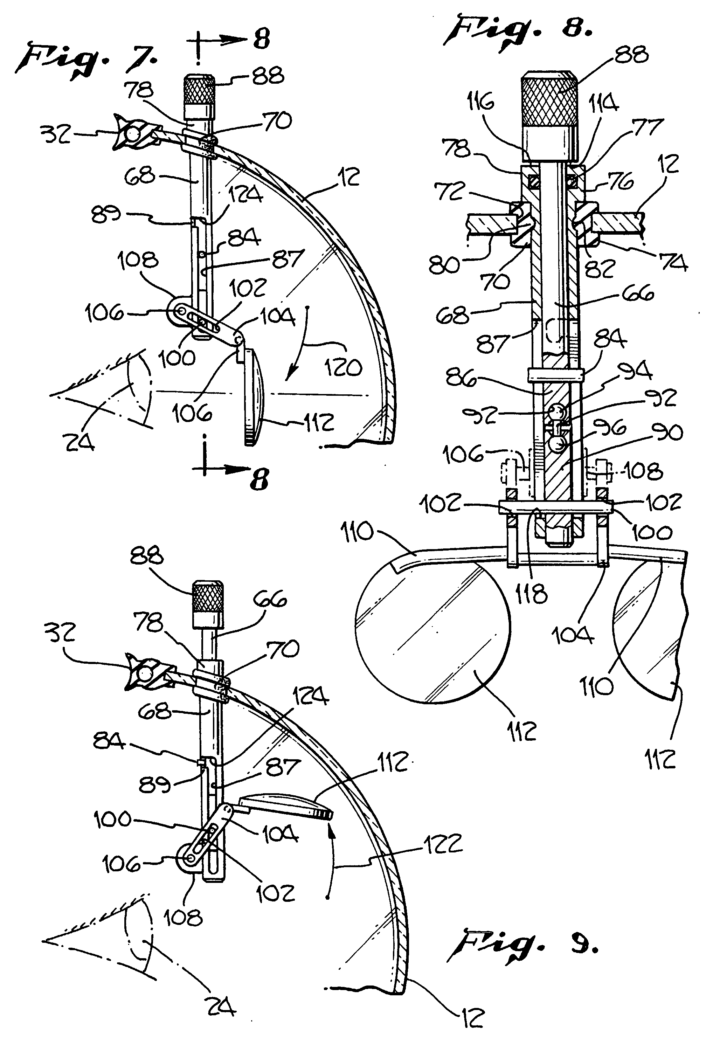

FIGS. 7 through 9 show yet another embodiment of the diving mask 10 for use with corrective lenses having a turning shaft 66 which slidably and rotatably engages a sleeve 68 mounted to the hemispherically-shaped lenses 12. The sleeve 68 engages a gasket 70 made out of a flexible material such as rubber, or the like, which is mounted in an aperture 72 in the lenses 12. Flanges 74 of the gasket 70 engage the lenses 12 providing a seal between the gasket 70 and lenses 12.

Flanges 76 of an upper portion 78 of the sleeve 68 bear against the gasket 70 helping to provide a seal. In addition, an O-ring seal 77 is provided in upper portion 78 as shown in FIG. 8. Also, an annular portion 80 at the inside cylindrical surface of the gasket 70 engages an annular groove 82 in the outer cylindrical surface of the sleeve, providing a further seal.

The rotating shaft 66 has a pin 84 attached to an upper portion 86 thereof which slidably engages an elongated slot 87 in the sleeve 68 so that the shaft 66 may be grasped by a knob 88 at the top of the shaft 66 and pulled upward. The shaft 66 also has a lower portion 90 which is connected to the upper portion 86 by a connecting member 92 having upper and lower balls 94 and 96, respectively, attached thereto. Upper ball 94 rotatably engages a spherically-shaped cavity 98 in the upper portion 86 of the shaft 66 so that a universal joint is provided and upper portion 86 is free to rotate about its longitudinal axis. Another pin 100 is attached to the lower portion 90 of the shaft 66. This pin 100 also slidably engages elongated slot 87 in the sleeve 68 which also allows the lower portion 90 of the shaft 66 to be moved upward by pulling upward on the knob 88.

Pin 100 also slidably engages elongated slots 102 in slotted arms 104. The slotted arms 104 are pivotally engaged at one end of each arm to pins 106 attached to lugs 108 at opposite slides of the sleeve 68. Elongated members 110 attached to a pair of retractable corrective lenses 112 are attached to the other ends of the slotted arms 104.

In order to position the corrective lenses 112 in a position in front of a user's eyes 24 as shown in FIG. 7, the lower portion 90 is allowed to drop toward the bottom of the sleeve 68 until the bottom surface 114 of the knob 88 comes into contact with the top 116 of upper portion 78 of the sleeve 68. Alternatively, the different parts may be sized so that downward movement of the shaft 66 is stopped when pin 100 comes into contact with the lower end 118 of slot 87 in the sleeve 68.

As the shaft 66 moves downward, the corrective lenses 112 rotate as indicated by arrow 120 in FIG. 7 as arms 104 pivot about pins 106 until the lenses 112 reach a position in front of a user's eyes as shown. If the user wishes to move the lenses 112 away from his or her eyes 24, this is accomplished by pulling upward on knob 88 which causes shaft 66 to move upward and the lenses 112 to rotate as arms 104 pivot about pins 106 as illustrated by arrow 122 shown in FIG. 9. When pin 84 reaches the top end 124 of slot 87, the user may simply rotate the upper portion 86 of shaft 66 by turning knob 88 until pin 84 engages horizontal slot 89 at the top end 124 of slot 87. The shaft 66 will then be held in place by pin 84 engaging slot 89 and the lenses 112 will be moved to a position above the user's eyes 24.

If the user wishes to lower the lenses 112 again to a position in front of his or her eyes 24, then knob 88 may be rotated so that pin 84 disengages from slot 89, and the lenses 112 may be lowered as described above.

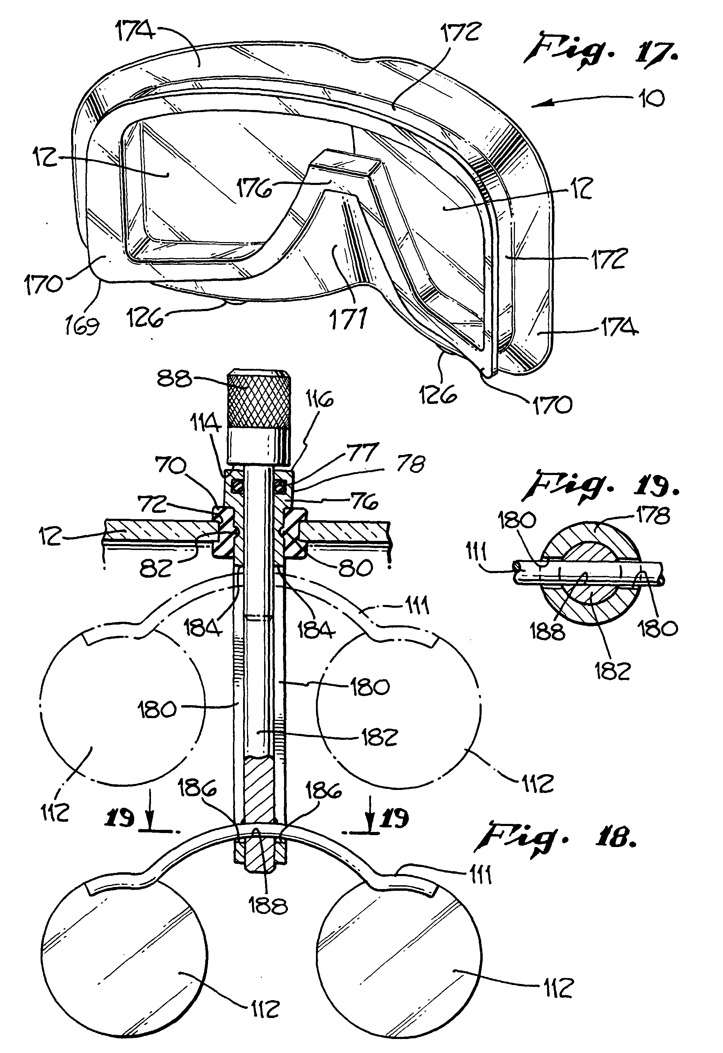

Another embodiment of a shaft 182 is shown in FIGS. 18 and 19. The shaft 182 slidably engages a sleeve 178 mounted on the hemispherically-shaped lenses 12. The sleeve 178 engages gasket 70, which is mounted in aperture 72 in the lenses 12, as discussed above for the embodiment shown in FIGS. 7-9.

An elongated member 111, attached to a pair of retractable corrective lenses 112, passes through an aperture 188 in the shaft 182, near the lower end of the shaft 182. Member 111 may be welded to the shaft 182, or otherwise attached to shaft 182 by adhesive, or the like.

The sleeve 178 has an elongated slot 180 passing therethrough, which allows the corrective lenses 112 to be raised and lowered, by grasping knob 88 at the top of the shaft 182, and by pulling upward or pushing downward on the knob 88. Downward movement of the lenses 112 may be stopped by sizing the shaft 182 and sleeve 178 so that elongated member 111 comes into contact with lower end 186 of the slot 180, or bottom surface 114 of the knob 88 comes into contact with the top 116 of upper portion 78 of the sleeve 178.

The O-ring seal 77 holds the shaft 182 in place when the corrective lenses 112 are in an upward position, as illustrated by dashed lines in FIG. 18. Any other desirable means may be used to hold the shaft 178 in the upward position.

FIGS. 13 through 15 show another embodiment of the diving mask 10 having a pair of hemispherically-shaped lenses 12 with a purge valve 126 therein mounted on the flexible gasket 14. A diver or user may expel or force any water inside the mask 10 through the purge valve 126 by exhaling through his or her nose. The purge valve 126 is designed to permit air or fluid to flow from inside the diving mask 10 to outside the mask 10, but does not permit such flow into the mask 10. Thus, water may be purged from inside the diving mask 10 through valve 126 without allowing leakage into the mask 10. Any suitable purge valve 126 may be used such as the purge valve described in U.S. Patent No. 4,856,120, issued to Hart on August 15, 1989, the disclosure of which is hereby incorporated by reference thereto.

One or more purge valves 126 may be used for the diving mask 10. For example, one valve 126 may be used for each lens 12. Also, only one purge valve 126 may be used for the diving mask 10, and a diver may tilt his or her head back and forth to move water from the lens 12 without the valve 126 to the lens 12 with the valve 126 prior to purging the water from the mask 10.

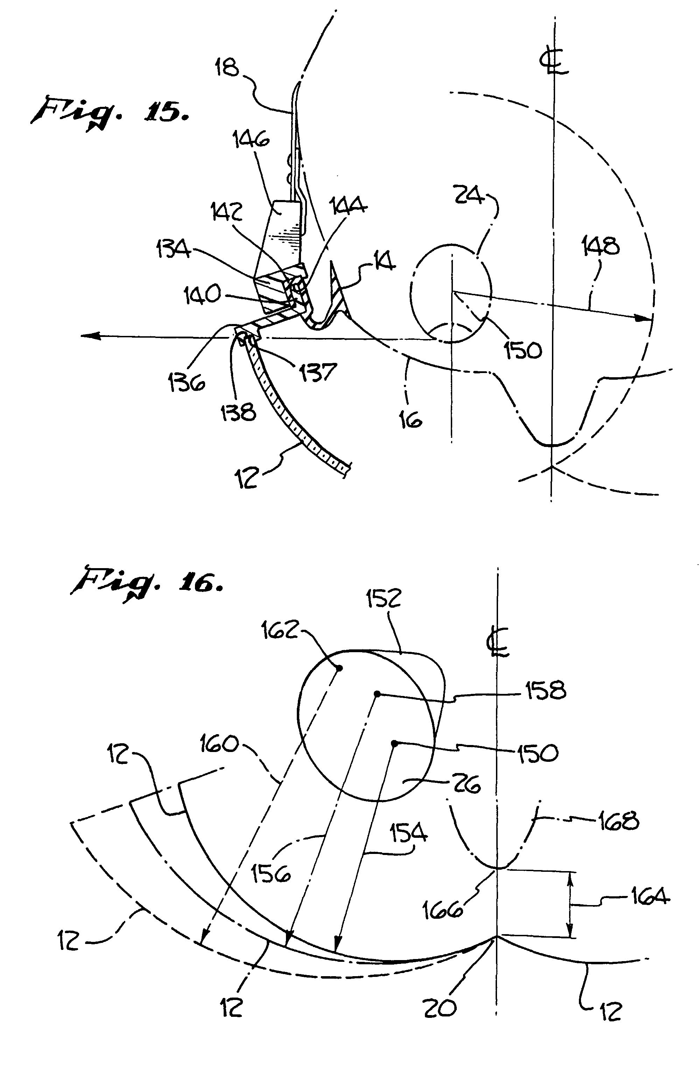

Each of the lenses 12 having one of the purge valves 126 preferably has a collecting area 128 near the front and bottom of such lens 12 as shown in FIG. 14. The collecting area 128 is preferably formed as shown in FIG. 14, at angles 130 and 132 as measured from horizontal and vertical lines, respectively. Angle 130 preferably has a range of from about 30 degrees to about 90 degrees, and angle 132 may be any size up to about 60 degrees. However, angles 130 and 132 may vary as desired.

Water that has entered the lens 12 of the diving mask 10 past the flexible gasket 14 will move toward the bottom of the lens 12 and into the collecting area 128. Angles 130 and 132, help to prevent collected water from sloshing out of the collecting area 128. Also, the location of the purge valve 126 at the bottom of the collecting area 128 and angles 130 and 132 help to direct bubbles formed when water is exhausted out the valve 126 toward the back of the diving mask 10, away from the field of vision of a diver.

Angles 130 and 132 help to prevent water from sloshing or moving out of the collecting area 128 when a diver's head is in a vertical position as shown in FIG. 14, and when the diver is in a prone swimming position under water with his or her neck bent upward at approximately a 45 degree angle. If water trickles into the diving mask 10 while the diver is in a prone swimming position and looking downward, the diver may purge water trapped inside the mask 10 through valve 126 by moving his or her head and/or neck upward at approximately a 45 degree angle, and then exhaling through his or her nose to force water out of the mask 10 through valve 126.

FIG. 15 shows how the hemispherically-shaped lenses 12 may be connected to straps 18 and the flexible gasket 14 by a clamp 134 and alignment flange 136. The flange 136 may be molded or formed as an integral part of the lenses 12, or attached to ends or edges 138 of the lenses 12, which engage channel 137, as shown in FIG. 15, by adhesive, fusion, or any suitable fastening means. The alignment flange 136 has extension 140. However, any suitable shape or configuration may be used for the flange 136. End portion 142 of the flexible gasket 14 is disposed in channel 144 of the clamp 134, folds around the extension 140, and is clamped between the flange 136 and extension 140. Clamp 134 may be attached to flange 136 by adhesive, welding, fasteners, or any suitable means. The straps 18 are attached to extensions 146 of the clamp 134.

As illustrated in FIG. 15, the lenses 12 are sized and mounted on the flexible gasket 14 so that the spherical center of curvature of each of the lenses 12 with a radius 148 substantially falls on, or coincides with, the center of rotation 150 of the corresponding eye 24 of a diver surrounded by the lens 12. The center of rotation of a person's eye 24 is about 19.05 cm (3/4 inch) behind the front surface of the cornea. If the center of curvature of the lenses 12 substantially coincides with the center of rotation 150 of a diver's eyes 24, viewing distortion will be minimized when a diver's eyes 24 pan, tilt or rotate in their corresponding eye sockets.

It is the intention of this invention that any suitable means may be used to mount the lenses 12 on the flexible gasket 14 so that the center of curvature of the lenses 12 substantially coincides with the center of rotation 150 of the eyes 24 of a diver. As such, alignment of the centers of curvature and rotation may be achieved by fitting or forming the lenses 12 to match the contours of a diver's face 16, or a standard pair of lenses 12 may be mounted on a contoured portion of the mask 10 fitted or formed to match the contours of the diver's face 16, all as described in the above discussion. In addition, predetermined sizes may be selected for the flexible gasket 14, clamp 134 and flange 136 in order to mount different sizes of lenses 12 on the diving mask 10 so that the centers of curvature and rotation are aligned within an acceptable zone of misalignment, as discussed below.

FIG. 16 is a schematic representation illustrating how the spherical center of curvature of each of the hemispherically-shaped lenses 12 of the present invention is intended to substantially coincide or align with the center of rotation of a diver's eye 24, and falls within a predetermined acceptable zone of misalignment illustrated by region 152, which represents both horizontal and vertical misalignment.

The optical nodal point 26 of a diver's eyes 24 is the point at which the spherical center of curvature of the lenses 12 should align or coincide with if the eyes 24 do not pan, tilt or rotate in their eye sockets. The optical nodal point 26 is about 7 cm behind the front surface of the cornea of an eye. However, because a diver's eyes 24 move in their sockets, the spherical center of curvature of the lenses 12 should align or coincide with the center of rotation 150 of the diver's eyes 24 to achieve optimum vision through the lenses 12.

It is the intention of the present invention to substantially align the centers of curvature and rotation 15 in order to achieve improved vision through the hemispherically-shaped lenses 12 of the diving mask 10. Radius 154 shown in FIG. 16 represents a particular size lens 12 having a spherical center of curvature that coincides with the center of rotation 150 of an eye 24. Radii 156 and 160 represent two other sizes of lenses 12 having centers of curvature 158 and 162, respectively, that do not coincide exactly with the center of rotation of the eye 24. However, the centers of curvature 158 and 162 fall within the predetermined acceptable zone of misalignment of the present invention represented in FIG. 16 by the three dimensional region 152. "Substantially" coincides or aligns with, as used herein, means that the spherical center of curvature of a lens 12 falls within the predetermined acceptable zone of misalignment represented by region 152 so that improved vision is provided by the lens 12.

The two hemispherically-shaped lenses 12 are joined along edge 20. As a result, the distance 164 between edge 20 and the bridge 166 of a diver's nose 168 should be minimized to prevent vision distortion through the lenses 12 due to edge 20. Preferably, distance 164 has a range of from about 1 cm to about 50 mm.

The present invention will allow a majority of divers to use standard lenses 12 mounted on the diving mask 10 that have centers of spherical curvature that fall within the predetermined acceptable zone of misalignment or within region 152. However, larger diameter lenses 12 will provide a larger predetermined acceptable zone of misalignment than smaller diameter lenses 12. Therefore, for purposes of the present invention, the exterior diameter of the lenses 12 preferably has a range of from about 10.8 cm (4.25 inches) to about 22.9 cm (9 inches).

FIG. 17 shows another embodiment of the diving mask 10 having a pair of hemispherically-shaped lenses 12 mounted on a peripheral flange 174 of a support portion 169 of the mask 10. The support portion 169 has a portion 170 that is clamped (by, e.g., clamp 134), or is otherwise fastened to the flexible gasket 14. Portion 169 also has another portion 171 which covers nose portion 22 of gasket 14 that fits around a user's nose, an upward nose portion 176 connected to portion 171, and portion 172 which connects peripheral flange 174 to portions 170 and 176.

The support portion 169 shown in FIG. 17 may be fabricated as an integral piece, such as by using molding techniques and plastic or other suitable material, or the various parts of portion 169 may be attached together. The support portion 14 may be used with selected sizes of lenses 12 and flexible gaskets 14, and designed so that the spherical center of curvature of each lens 12 substantially coincides with the optical modal point of a user's eye, or with the center of rotation of a user's eye, or falls within a predetermined acceptable zone of misalignment, as described above. Also, purge valves 126 may be used in the support portion 169 of FIG. 17 and portion 169 may have a collecting area 128.

It is intended that different sizes (or standard sizes) of flexible gaskets 14 may be selected and used with the lenses 12 and support 169, and different sizes (or standard sizes) of flexible gaskets 14 may be selected and used with the lenses 12 and support 169, so that the spherical center of curvature of each lens 12 substantially coincides with the optical modal point of a user's eye, or with the center of rotation of a user's eye, or falls within a predetermined acceptable zone of misalignment, as described above.

# EP 0 602 148 B1

It is important to note that the sizes of the flexible gasket 14, clamp 134 and flange 136 may be chosen to fit or accommodate any desirable size lens 12. Nearsighted divers may use smaller size lenses 12. If desired, the diving mask 10 of FIGS. 13 through 17 may be used with the corrective lenses of FIGS. 7 through 9, and 18. Any combination of features disclosed in this application may be used for the diving mask 10. Also, the hemispherically-shaped lenses 12 of the diving mask 10 may be used with a full face mask, or a helmet which covers the head of a diver.

The above description discloses the preferred embodiments of the present invention. However, persons of ordinary skill in the art are capable of numerous modifications once taught these principles. Accordingly, it will be understood by those skilled in the art that changes in form and details may be made to the above-detailed embodiments without departing from the scope of the invention.

**Claims**

1.   An underwater diving mask comprising:

   a flexible gasket (14);
   two generally hemispherically-shaped lenses (12) mounted on said flexible portion; and
   means (18) for releasably securing said flexible gasket to a face of a user, characterised in that the outer surface of each of said hemispherically-shaped lenses has a curvature corresponsding to an exterior diameter in the range of about 10.8 cm (4.25 inches) to about 22.9 cm (9.0 inches) each of said lenses having peripheral edges (42) formed to substantially fit contours of said user's face so that the center of curvature of each of said hemispherically-shaped lenses substantially coincides with the optical nodal point (26) or center of rotation (150) of the corresponding eye (24) of said user's face.

2.   The diving mask of Claim 1 wherein said flexible gasket includes a skirt portion (32) having an elongated cavity (37) therein and apertures (44) passing into said cavity from outside said skirt portion so that water fills said cavity when said diving mask is used under water.

3.   The diving mask of Claim 2 wherein said skirt portion further includes clevis arms (38) that engage said lenses and flexible curved extensions (34) that contact said user's face.

4.   The diving mask according to any preceding claim wherein said hemispherically-shaped lenses have a horizontal field of view of about 200 degrees and a vertical field of view of about 150 degrees.

5.   The diving mask according to any preceding claim wherein said hemispherically-shaped lenses are formed to substantially fit said contours of said user's face using laser scanning techniques.

6.   The diving mask of any preceding claim further comprising corrective lenses (112) retractably mounted relative to said hemispherically-shaped lenses for movement between an operative position and a retracted inoperative position.

7.   An underwater diving mask comprising:

   two generally hemispherically-shaped lenses (12); and
   mounting means for mounting said lenses on a face of a user, said mounting means including a flexible gasket (14) and means (18) for releasably securing said flexible portion to said user's face characterised in that the outer surface of each of said lenses (12) has a curvature corresponding to an exterior diameter in the range of from about 10.8 cm (4.25 inches) to about 22.9 cm (9.0 inches) and in that the mounting means includes a contoured portion (46) attached to said flexible gasket and said lenses, the contoured portion being formed to substantially fit contours of said user's face so that the center of curvature of each of said lenses substantially coincides with the optical nodal point (26) or center of rotation (150) of the corresponding eye of said user.

8.   The diving mask of any of Claims 1 to 7 including:

   a sleeve (68) mounted to said pair of hemispherically-shaped lenses (12);
   a shaft (65) slidably engaging said sleeve (68);
   a pair of corrective lenses (112); and
   means (80) for selectively raising and lowering said corrective lenses and for pivotally coupling said corrective lenses to said sleeve.

9. The diving mask according to any preceding claim wherein a purge valve (126) is located in said diving mask so that bubbles formed when water is expelled from said mask pass backward away from a field of vision of said user.

10. The diving mask of Claim 9 wherein each of said lenses has a water collecting area (128), said purge valve being located in said collecting area (128).

11. The diving mask of Claim 9 or 10 wherein said collecting area (128) is formed at angles measured from horizontal and vertical lines, said angles being measured when a head of said user is oriented in a vertical position, said angle measured from said horizontal line having a range of from about 30 degrees to about 90 degrees.

12. The diving mask of Claim 9 or 10 wherein said collecting area (128) is formed at angles measured from horizontal and vertical lines, said angles being measured when a head of said user is oriented in a vertical position, said angle measured from said vertical line having a value up to about 60 degrees.

13. The diving mask of Claim 9 wherein said mounting means includes a support portion (169), said purge valve being located in said support portion.

14. A method of fabricating a diving mask comprising the steps of:

forming two hemispherically-shaped lenses (12) each having an outer surface having a curvature corresponding to an exterior diameter in the range of from about 10.8 cm (4.25 inches) to about 22.9 cm (9.0 inches);
measuring the contours of a user's face;
forming peripheral edges (42) of said lenses to substantially fit said contours of said user's face; and
mounting said lenses on a flexible gasket (14) so that the center of curvature of each of said lenses when mounted on said flexible gasket substantially coincides with the optical nodal point (26) or center of rotation (150) of the corresponding eye of said user's face.

15. The method of Claim 14 wherein said step of measuring contours includes scanning said contours.

16. The method of Claim 15 wherein said scanning step includes using a laser beam.

17. The method of Claim 14 wherein said step of measuring contours includes topographically mapping said contours.

18. A method of fabricating a diving mask comprising the steps of:

forming two hemispherically-shaped lenses (12) having an outer surface having a curvature corresponding to an exterior diameter in the range of about 10.8 cm (4.25 inches) to about 22.9 cm (9.0 inches) for mounting on a mounting means having a flexible gasket (14) and a contoured portion (46);
measuring the contours of a user's face;
forming said contoured portion (46) to substantially fit said contours of said user's face;
attaching said contoured portion (46) to said gasket portion (14); and
mounting said lenses (12) on said contoured portion (46) so that the center of curvature of each of said lenses when mounted on said contoured portion substantially coincides with the optical nodal point (26) or center of rotation (150) of the corresponding eye of said user's face.

19. A method of fabricating a diving mask comprising the steps of:

selecting two hemispherically-shaped lenses (12) of a predetermined size and having an outer surface having a curvature corresponding to an exterior diameter in the range of about 10.8 cm (4.25 inches) to about 22.9 cm (9.0 inches) for mounting on mounting means having a flexible gasket (14) and support portion (46);
selecting a flexible gasket (14) of a predetermined size to fit a user's face;
selecting a support portion (46) of a predetermined size;
attaching said support portion to said flexible gasket; and
mounting said lenses (12) on said support portion so that the center of curvature of each of said hemispherically-shaped lenses substantially coincides with the center of rotation (150) of the corresponding eye of said user's face.

**Patentansprüche**

1.  Eine Unterwasser-Tauchmaske mit folgenden Merkmalen:

    ein flexibler Dichtkörper (14);
    zwei im wesentlichen halbkugelförmige Linsen (12), die an dem Dichtkörper angeordnet sind; und
    Mittel (18) zum lösbaren Befestigen des flexiblen Dichtkörpers im Gesicht eines Benutzers,

    **dadurch gekennzeichnet,**

    dass die äußere Oberfläche jeder der halbkugelförmigen Linsen eine Krümmung entsprechend einem äußeren
    Durchmesser im Bereich von etwa 10,8 cm (4.25 inches) bis etwa 22,9 cm (9.0 inches) aufweist,
    und dass jede Linse einen Umfangsrand (42) aufweist, der so geformt ist, dass er im wesentlichen zu den
    Konturen des Gesichts des Benutzers passt, so dass das Krümmungszentrum jeder halbkugelförmigen Linse
    im wesentlichen mit dem optischen Knotenpunkt (26) oder dem Rotationszentrum (150) des betreffenden
    Auges (24) des Gesichts des Benutzers zusammenfällt.

2.  Die Tauchmaske nach Anspruch 1, **dadurch gekennzeichnet,** dass der flexible Dichtkörper einen Rand (32) aufweist, in dem eine sich längs erstreckende Ausnehmung (37) und Kanäle (44) vorgesehen sind, die von außerhalb
    des Randes in die Ausnehmung führen, so dass die Ausnehmung bei Benutzung der Tauchmaske unter Wasser
    mit Wasser gefüllt wird.

3.  Die Tauchmaske nach Anspruch 2, **dadurch gekennzeichnet,** dass der Rand zusätzlich U-förmige Stege (38)
    zur Aufnahme der Linsen und flexible bogenförmige Lippen (34) zur Anlage an dem Gesicht des Benutzers aufweist.

4.  Die Tauchmaske nach einem der vorangehenden Ansprüche, **dadurch gekennzeichnet,** dass die halbkugelförmigen Linsen ein horizontales Sehfeld von etwa 200° und ein vertikales Sehfeld von etwa 150° einschließen.

5.  Die Tauchmaske nach einem der vorangehenden Ansprüche, **dadurch gekennzeichnet,** dass die halbkugelförmigen Linsen unter Benutzung von Laser-Scan-Techniken so geformt sind, dass sie im wesentlichen zu den Konturen des Gesichts des Benutzers passen.

6.  Die Tauchmaske nach einem der vorangehenden Ansprüche, **dadurch gekennzeichnet,** dass zusätzlich Korrekturlinsen (112) vorgesehen sind, die relativ zu den halbkugelförmigen Linsen bewegbar sind, so dass sie zwischen
    einer Nutzungsstellung und einer Nicht-Nutzungstellung verstellbar sind.

7.  Eine Unterwasser-Tauchmaske mit folgenden Merkmalen:

    zwei im wesentlichen halbkugelförmige Linsen (12); und
    Mittel zum Anbringen der Linsen am Gesicht eines Benutzers, die einen flexiblen Dichtkörper (14) und Mittel
    (18) zum lösbaren Befestigen des flexiblen Dichtkörpers im Gesicht eines Benutzers aufweisen,

    **dadurch gekennzeichnet,**

    dass die äußere Oberfläche jeder der Linsen (12) eine Krümmung entsprechend einem äußeren Durchmesser
    im Bereich von etwa 10,8 cm (4.25 inches) bis etwa 22,9 cm (9.0 inches) aufweist,
    und dass die Mittel zum Anbringen einen Profilteil (46) aufweisen, der den flexiblen Dichtkörper mit den Linsen
    verbindet und der so geformt ist, dass er im wesentlichen zu den Konturen des Gesichts des Benutzers passt,
    so dass das Krümmungszentrum jeder halbkugelförmigen Linse im wesentlichen mit dem optischen Knotenpunkt (26) oder dem Rotationszentrum (150) des betreffenden Auges (24) des Gesichts des Benutzers zusammenfällt.

8.  Die Tauchmaske nach einem der Ansprüche 1 bis 7, **dadurch gekennzeichnet,** dass

    ein an den beiden halbkugelförmigen Linsen (12) angeordnetes Rohr (68),
    eine in dem Rohr (68) gleitend gelagerte Welle (66),
    zwei Korrekturlinsen (112) und

Mittel (80) zum einzelnen Verschieben und zum Verschwenken der Korrekturlinsen relativ zu dem Rohr vorgesehen sind.

**9.** Die Tauchmaske nach einem der vorangehenden Ansprüche, **dadurch gekennzeichnet,** dass in der Tauchmaske ein Ablassventil (126) vorgesehen ist, so dass sich beim Herausführen von Wasser aus der Tauchmaske bildende Blasen nach rückwärts weg von einem Sehfeld des Benutzers austreten.

**10.** Die Tauchmaske nach Anspruch 9, **dadurch gekennzeichnet,** dass jede Linse einen Sammelraum (128) für Wasser aufweist und dass das Ablassventil in dem Sammelraum (128) angeordnet ist.

**11.** Die Tauchmaske nach Anspruch 9 und 10, **dadurch gekennzeichnet,** dass der Sammelraum (128) winklig zu horizontalen und vertikalen Linien angeordnet ist, wobei diese Winkel in einer Position des Benutzers mit aufrechtem Kopf bemessen werden und der Winkel gegenüber der horizontalen Linie etwa zwischen 30° und 90° beträgt.

**12.** Die Tauchmaske nach Anspruch 9 und 10, **dadurch gekennzeichnet,** dass der Sammelraum (128) winklig zu horizontalen und vertikalen Linien angeordnet ist, wobei diese Winkel in einer Position des Benutzers mit aufrechtem Kopf bemessen werden und der Winkel gegenüber der vertikalen Linie bis etwa 60° beträgt.

**13.** Die Tauchmaske nach Anspruch 9, **dadurch gekennzeichnet,** dass die Mittel zum Anbringen ein Tragteil (169) aufweisen und dass das Ablassventil an dem Tragteil angeordnet ist.

**14.** Ein Verfahren zur Herstellung einer Tauchmaske mit folgenden Schritten:

Formen zweier halbkugelförmiger Linsen (12), die eine äußere Oberfläche mit einer Krümmung entsprechend einem äußeren Durchmesser im Bereich von etwa 10,8 cm (4.25 inches) bis etwa 22,9 cm (9.0 inches) aufweisen;
Ausmessen der Konturen des Gesichts des Benutzers;
Formen eines Umfangsrandes (42) an den Linsen im wesentlichen passend zu der Kontur des Gesichtes des Benutzers; und
Anbringen der Linsen an einem flexiblen Dichtkörper (14); so dass das Krümmungszentrum jeder Linse beim Verbinden mit dem flexiblen Dichtkörper im wesentlichen mit dem optischen Knotenpunkt (26) oder dem Rotationszentrum (150) des betreffenden Auges des Gesichts des Benutzers zusammenfällt.

**15.** Das Verfahren nach Anspruch 14, **dadurch gekennzeichnet,** dass beim Ausmessen der Konturen des Gesichts des Benutzers die Konturen gescannt werden.

**16.** Das Verfahren nach Anspruch 15, **dadurch gekennzeichnet,** dass beim Scannen ein Laserstrahl benutzt wird.

**17.** Das Verfahren nach Anspruch 14, **dadurch gekennzeichnet,** dass beim Ausmessen der Konturen eine topographische Aufzeichnung der Konturen erfolgt.

**18.** Ein Verfahren zur Herstellung einer Tauchmaske mit folgenden Schritten:

Formen zweier halbkugelförmiger Linsen (12), die eine äußere Oberfläche mit einer Krümmung entsprechend einem äußeren Durchmesser im Bereich von etwa 10,8 cm (4.25 inches) bis etwa 22,9 cm (9.0 inches) aufweisen, zum Anbringen an Aufnahmemitteln, die einen flexiblen Dichtkörper (14) und einen Profilteil (46) aufweisen;
Ausmessen der Konturen des Gesichts des Benutzers;
Formen des Profilteils (46) im wesentlichen passend zu den Konturen des Gesichtes des Benutzers; und
Anbringen des Profilteils (46) an dem flexiblen Dichtkörper (14) ; und
Anordnen der Linsen (12) an dem Profilteil (46), so dass das Krümmungszentrum jeder Linse beim Verbinden mit dem Profilteil im wesentlichen mit dem optischen Knotenpunkt (26) oder dem Rotationszentrum (150) des betreffenden Auges des Gesichts des Benutzers zusammenfällt.

**19.** Ein Verfahren zur Herstellung einer Tauchmaske mit folgenden Schritten:

Auswählen zweier halbkugelförmiger Linsen (12) einer bestimmten Größe, die ein äußere Oberfläche mit einer Krümmung entsprechend einem äußeren Durchmesser im Bereich von etwa 10,8 cm (4.25 inches) bis etwa 22,9 cm (9.0 inches) aufweisen, zum Anbringen an Aufnahmemitteln, die einen flexiblen Dichtkörper (14) und einen Profilteil (46) aufweisen;

Auswählen eines Profilteils (46) einer bestimmten Größe im wesentlichen passend zu dem Gesicht des Benutzers;

Anbringen des Profilteils an dem flexiblen Dichtkörper; und

Anordnen der Linsen (12) an dem Profilteil, so dass das Krümmungszentrum jeder Linse im wesentlichen mit dem Rotationszentrum (150) des betreffenden Auges des Gesichts des Benutzers zusammenfällt.

## Revendications

1. Masque de plongée sous-marine comprenant :

   une garniture souple (14) ;
   deux lentilles de forme globalement hémisphérique (12) montées sur ladite partie souple ; et
   des moyens (18) pour fixer de manière amovible ladite garniture souple sur le visage d'un utilisateur, caractérisé en ce que la surface extérieure de chacune desdites lentilles de forme hémisphérique a une courbure correspondant à un diamètre extérieur dans la gamme d'environ 10,8 cm (4,25 pouces) à environ 22,9 cm (9,0 pouces), chacune desdites lentilles ayant des bords périphériques (42) formés de façon à épouser sensiblement les contours dudit visage de l'utilisateur, de sorte que le centre de courbure de chacune desdites lentilles de forme hémisphérique coïncide sensiblement avec le point nodal optique (26) ou centre de rotation (150) de l'oeil correspondant (24) dudit visage de l'utilisateur.

2. Masque de plongée selon la revendication 1, dans lequel ladite garniture souple comprend une partie formant jupe (32) contenant une cavité allongée (37) et des ouvertures (44) passant dans ladite cavité depuis l'extérieur de ladite partie formant jupe, de sorte que l'eau remplisse ladite cavité lorsque ledit masque de plongée est utilisé sous l'eau.

3. Masque de plongée selon la revendication 2, dans lequel ladite partie formant jupe comprend en outre des bras de fourche (38) qui viennent en prise avec lesdites lentilles et des extensions incurvées souples (34) qui viennent en contact avec ledit visage de l'utilisateur.

4. Masque de plongée selon l'une quelconque des revendications précédentes, dans lequel lesdites lentilles de forme hémisphérique possèdent un champ de vision horizontal d'environ 200 degrés et un champ de vision vertical d'environ 150 degrés.

5. Masque de plongée selon l'une quelconque des revendications précédentes, dans lequel lesdites lentilles de forme hémisphérique sont formées de façon à épouser sensiblement lesdits contours dudit visage de l'utilisateur au moyen de techniques de balayage par laser.

6. Masque de plongée selon l'une quelconque des revendications précédentes, comprenant en outre des lentilles correctrices (112) montées de façon rétractable par rapport auxdites lentilles de forme hémisphérique pour permettre le mouvement entre une position opérationnelle et une position rétractée non opérationnelle.

7. Masque de plongée sous-marine comprenant :

   deux lentilles de forme globalement hémisphérique (12) ; et
   des moyens de montage pour monter lesdites lentilles sur le visage d'un utilisateur, lesdits moyens de montage comprenant une garniture souple (14) et des moyens (18) pour fixer de manière amovible ladite partie souple audit visage de l'utilisateur, caractérisé en ce que la surface extérieure de chacune desdites lentilles (12) a une courbure correspondant à un diamètre extérieur dans la gamme d'environ 10,8 cm (4,25 pouces) à environ 22,9 cm (9,0 pouces) et en ce que les moyens de montage comprennent une partie profilée (46) fixée à ladite garniture souple et auxdites lentilles, la partie profilée étant formée pour épouser sensiblement les contours dudit visage de l'utilisateur, de sorte que le centre de courbure de chacune desdites lentilles coïncide sensiblement avec le point nodal optique (26) ou centre de rotation (150) de l'oeil correspondant dudit utilisateur.

8. Masque de plongée selon l'une quelconque des revendications 1 à 7, comprenant :

une gaine (68) montée sur ladite paire de lentilles de forme hémisphérique (12) ;

une tige (65) venant en prise de manière coulissante avec ladite gaine (68) ;

une paire de lentilles correctrices (112) ; et

des moyens (80) pour relever et abaisser de manière sélective lesdites lentilles correctrices et pour coupler de manière pivotante lesdites lentilles correctrices à ladite gaine.

9. Masque de plongée selon l'une quelconque des revendications précédentes, dans lequel une vanne d'extraction (126) est située dans ledit masque de plongée afin que les bulles qui se forment lorsque l'eau est expulsée dudit masque passent vers l'arrière et dégagent le champ de vision dudit utilisateur.

10. Masque de plongée selon la revendication 9, dans lequel chacune desdites lentilles possède une zone de récupération d'eau (128), ladite vanne d'extraction étant située dans ladite zone de récupération (128).

11. Masque de plongée selon la revendication 9 ou 10, dans lequel ladite zone de récupération (128) est formée à des angles mesurés par rapport à des lignes horizontales et verticales, lesdits angles étant mesurés lorsque la tête dudit utilisateur est orientée dans une position verticale, ledit angle mesuré par rapport à ladite ligne horizontale ayant un intervalle d'environ 30 degrés à environ 90 degrés.

12. Masque de plongée selon la revendication 9 ou 10, dans lequel ladite zone de récupération (128) est formée à des angles mesurés par rapport à des lignes horizontales et verticales, lesdits angles étant mesurés lorsque la tête dudit utilisateur est orientée dans une position verticale, ledit angle mesuré par rapport à ladite ligne verticale ayant une valeur allant jusqu'à 60 degrés environ.

13. Masque de plongée selon la revendication 9, dans lequel lesdits moyens de montage comprennent une partie de support (169), ladite vanne d'extraction étant située dans ladite partie de support.

14. Procédé de fabrication d'un masque de plongée, comprenant les étapes consistant à :

former deux lentilles de forme hémisphérique (12) ayant chacune une surface extérieure ayant une courbure correspondant à un diamètre extérieur dans la gamme d'environ 10,8 cm (4,25 pouces) à environ 22,9 cm (9,0 pouces) ;

mesurer les contours du visage d'un utilisateur ;

former des bords périphériques (42) desdites lentilles pour qu'ils épousent sensiblement lesdits contours dudit visage de l'utilisateur ; et

monter lesdites lentilles sur une garniture souple (14) de sorte que le centre de courbure de chacune desdites lentilles, lorsqu'elles sont montées sur ladite garniture souple, coïncide sensiblement avec le point nodal optique (26) ou centre de rotation (150) de l'oeil correspondant dudit visage de l'utilisateur.

15. Procédé selon la revendication 14, dans lequel ladite étape consistant à mesurer les contours comprend le balayage desdits contours.

16. Procédé selon la revendication 15, dans lequel ladite étape de balayage comprend l'utilisation d'un faisceau laser.

17. Procédé selon la revendication 14, dans lequel ladite étape consistant à mesurer les contours comprend le levé topographique desdits contours.

18. Procédé de fabrication d'un masque de plongée, comprenant les étapes consistant à :

former deux lentilles de forme hémisphérique (12) ayant une surface extérieure ayant une courbure correspondant à un diamètre extérieur dans la gamme d'environ 10,8 cm (4,25 pouces) à environ 22,9 cm (9,0 pouces) pour le montage sur des moyens de montage ayant une garniture souple (14) et une partie profilée (46) ;

mesurer les contours du visage d'un utilisateur ;

former ladite partie profilée (46) pour qu'elle épouse sensiblement lesdits contours dudit visage de l'utilisateur ;

fixer ladite partie profilée (46) à ladite partie formant garniture (14) ; et

monter lesdites lentilles (12) sur ladite partie profilée (46) de sorte que le centre de courbure de chacune desdites lentilles, lorsqu'elles sont montées sur ladite partie profilée, coïncide sensiblement avec le point nodal optique (26) ou centre de rotation (150) de l'oeil correspondant dudit visage de l'utilisateur.

**19.** Procédé de fabrication d'un masque de plongée, comprenant les étapes consistant à :

choisir deux lentilles de forme hémisphérique (12) d'une taille prédéterminée et ayant une surface extérieure ayant une courbure correspondant à un diamètre extérieur dans la gamme d'environ 10,8 cm (4,25 pouces) à environ 22,9 cm (9,0 pouces) pour le montage sur des moyens de montage ayant une garniture souple (14) et une partie de support (46) ;
choisir une garniture souple (14) d'une taille prédéterminée pour qu'elle épouse le visage d'un utilisateur ;
choisir une partie de support (46) d'une taille prédéterminée ;
fixer ladite partie de support à ladite garniture souple ; et
monter lesdites lentilles (12) sur ladite partie de support de sorte que le centre de courbure de chacune desdites lentilles de forme hémisphérique coïncide sensiblement avec le centre de rotation (150) de l'oeil correspondant dudit visage de l'utilisateur.

Fig. 2.

Fig. 1.

EP 0 602 148 B1

Fig. 3.

Fig. 4.

Fig. 5.

Fig. 6.

Fig. 7.

Fig. 8.

Fig. 9.

Fig. 10.

Fig. 11.

Fig. 12.

Fig. 14.

Fig. 13.

Fig. 15.

Fig. 16.

Fig. 17.

Fig. 19.

Fig. 18.